# EUROPEAN PATENT APPLICATION

(11) **EP 1 092 595 A1**
(43) Date of publication of application: **18.04.2001**
(21) Application number: 00309048.7
(22) Date of filing: 13.10.2000
(51) Int. Cl.: B60R 13/10, B44B 5/00

(54) **Method and apparatus for assembly of identification plates.**

(30) Priority: 13.10.1999 GB 9924263
(71) Applicant: Statefresh Limited, Birmingham, West Midlands B6 7JJ (GB)
(72) Inventor: Taffender, Richard, Statefresh Limited, Witton, Birmingham, West Midlands B6 7JJ (GB); Cordell, Michael, Statefresh Limited, Witton, Birmingham, West Midlands B6 7JJ (GB)
(74) Representative: King, James Bertram

(57) **Abstract**

A method facilitating the production of an identification plate comprising a rigid backing plate having a peripheral upstanding rim bounding a flat area to receive a carrier sheet, one surface of which is printed with indicia and the other surface of which has a contact adhesive. In the method an edge of the carrier sheet is aligned in registration with the plate and the adhesive surface at said edge contacted therewith; the sheet then being progressively pressed into contact with the plate over the flat area using a pressure roller. The pressure roller has a recess, channel or depression to receive the upstanding rim. The apparatus used includes a housing (10) mounted on a base (11) which has an elongate extension platform (12). The housing contains a roller (13) turned by means of a motor and drive unit (14). The roller has a surface formed by a layer of rubber material (15) which includes a transverse recess or slot (16). A carrier (17) has a central area (18) which is adapted to receive the plate (2) with accurate positioning defined by side pieces (19) and end stop (20). The carrier may move into the housing (10) and thus beneath the roller (13).

Using automatic or manual indexing means the end rim (2a) of the plate (1) which is closest to the roller (13) is located so that the rim is engaged by the recess (16) in the surface (15) after which the carrier and plate move through the housing beneath the roller so that the sheet (4) is pressed firmly into contact with the plate.

## Description

This invention relates to a method and apparatus for the assembly of identification plates such as plates carrying indicia comprising, for example letters and numerals as are used on motor vehicles being commonly referred to as "number plates".

This invention is more particularly concerned with such number plates which are formed from a thin sheet of metal, such as aluminium, to which has been applied an adhesive backed reflective carrier strip of material onto which are applied the indicia comprising the required identification letters and numerals. In order to provide for the thinnest possible metal sheet it is necessary to use some means of strengthening and generally this comprises an embossed or pressed upstanding rim or lip around the periphery of the sheet which thus serves as a stiffening means.

In the known art it is essential for the reflective strip to be applied and adhered to the sheet whilst in flat form due to the construction of apparatus used and the sheet is thereafter embossed to produce the stiffening rim. The indicia may then be applied by attachment of letters and numerals for example using rivets or by embossing the sheet and applying suitable medium to the upstanding embossed zones. Due to the fact that the metal sheets including the peripheral stiffening are not flat, it is not possible to print directly onto the reflective strips using known printing methods. In order to achieve the printing it is necessary for the assembly to flex around the print head and this is not possible once the complete plate has been formed.

This invention seeks to provide a method and apparatus for forming an identification plate comprising a metal backing sheet having a peripheral stiffening rib bounding a reflective area which carries printed indicia thereon.

A further object of this invention is to provide a method and apparatus whereby a reflective sheet of adhesive backed material may be applied with accurate registration and firmly bonded to a backing sheet which incorporates a peripheral rib or ridge.

According to this invention there is provided a method for the production of an identification plate comprising a rigid backing plate having a peripheral upstanding rim bounding a flat area to receive a carrier sheet, one surface of which is printed with indicia and the other surface of which has a contact adhesive, the method being characterised in that, an edge of the carrier sheet is aligned in registration with the plate and the adhesive surface at said edge contacted therewith; the sheet then being progressively pressed into contact with the plate over the flat area using a pressure roller; the pressure roller having a recess, channel or depression to receive the upstanding rim.

In a preferred embodiment the plate will be of elongate rectangular shape having a peripheral upstanding rim formed by a pressing operation. The rim will usually be in the form of a channel having a hemispherical concave cross-section as viewed from the rear. The rim bounds and thus defines a flat area to receive the sheet.

The sheet preferably comprises a flexible plastics material of which one surface, the front, has a reflective layer, with the rear surface having a contact adhesive coating protected by a releasable film.

In the method the sheets will generally be pre-printed on the front surface with the indicia and using preferably an acrylic ink. The printing is effected using a continuous printing apparatus. Each sheet could be printed separately but more preferably a continuous strip is printed sequentially and thereafter cut into individual sheet pieces.

The sheet is applied to the plate by first peeling away the backing at an end sufficient to enable the sheet to be "tacked" to the plate in correct registration at an end. The plate is then presented for passage beneath a firm but resilient roller which includes a transverse depression adapted to embrace the rim at one end of the plate. The plate is positioned such that the depression engages the rim whereby as the roller rotates the sheet is progressively pressed onto the plate whilst the backing is stripped away.

This invention therefore provides a method for the accurate attachment of the adhesive pre-printed sheet onto the pre-formed plate using a pressure roller with parts to engage and receive the rim of the plate so that pressure is directed to the flat area only.

This invention also provides an apparatus to enable the method to be carried out, the apparatus including a roller having a firm yet resilient surface layer, of a dense foam rubber material as example, the layer including at least a transverse depression to receive the end rim of a mounting plate. The depression may be defined by a channel or by the ends of the layer which is wrapped around the roller and glued thereto with the ends spaced apart.

More specifically this invention provides an apparatus for carrying out the method, comprising an elongate support platform, a roller rotationally mounted in a support and located above and at an end of the platform, the roller having a surface of a firm yet resilient material and including a lateral groove or channel across the width thereof, a drive means to rotate the roller, a carriage mounted to slide on the platform so as to be movable beneath the roller on rotation thereof, the carriage defining and area to receive a plate, whereby an upstanding end rim of the plate engages the channel in the roller to be drawn beneath the roller which thereby applies pressure to the plate surface.

If required the surface of the roller may also have peripheral grooves spaced in parallel and in correspondence with the spacing of the rims at each side of the plate.

Further and preferred features of this invention and one construction of preferred apparatus are now described in conjunction with the drawings.

In the drawings:
- Fig 1: shows a front plan view of a finished vehicle number plate,
- Fig 2: shows a transverse cross-section on A-A of the plate of Fig 1 to a larger scale,
- Fig 3: shows an end on view of an apparatus for producing the plate with a plate in an initial position,

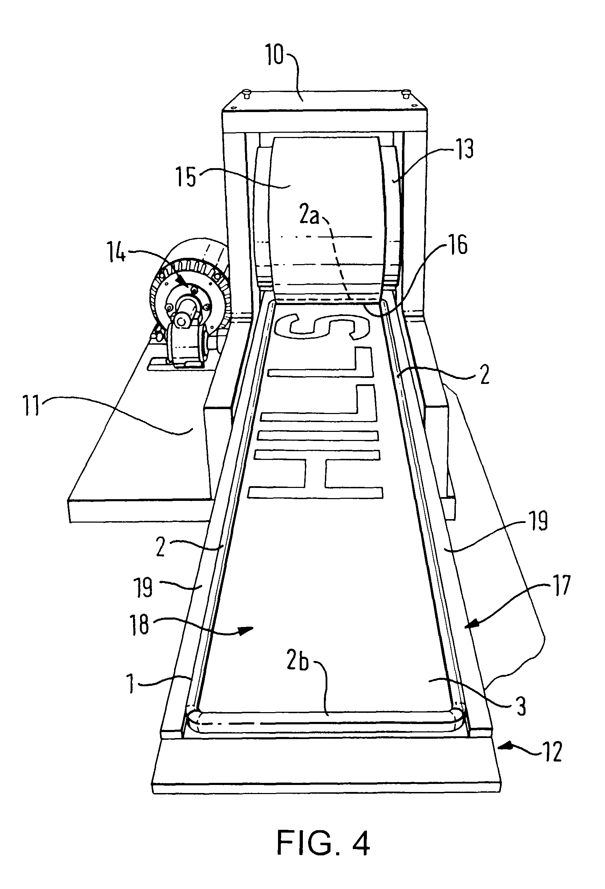

- Fig 4: shows a view as Fig. 3 but with the plate engaging the roller, and
- Fig 5: shows a side view of the apparatus of Figs 3 and 4.

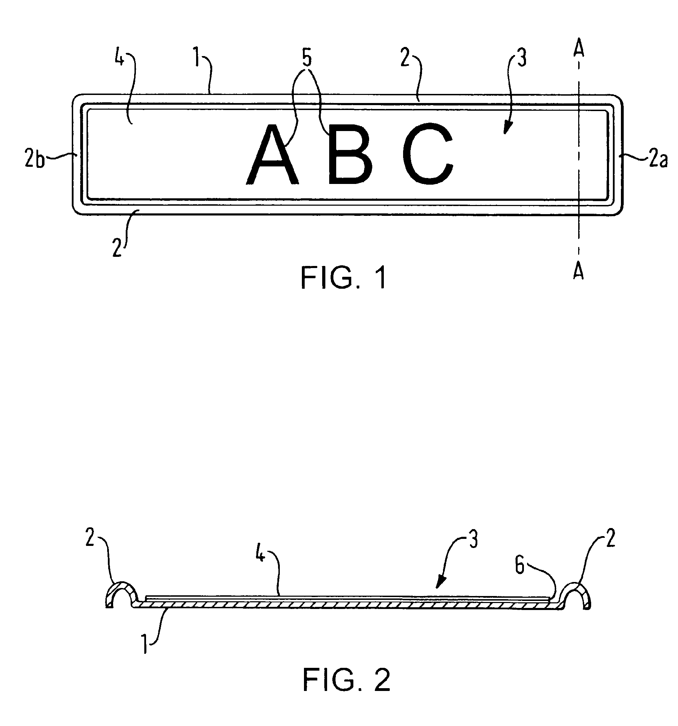

Referring firstly to Figs 1 and 2 a vehicle number plate comprises an elongate rectangular aluminium sheet support 1 which is pre-formed by a stamping operation with an upstanding peripheral rim 2, 2a, 2b bounding all four sides and defining a flat area 3. The rim is essential to provide for sufficient stiffness without undue thickness of metal being necessary.

The flat area 3 receives a thin flexible sheet material 4 of which the front surface has a reflective layer and includes indicia 5 which have been printed thereon using an ink or by any other suitable means such as transfers. The rear surface of the sheet 4 has a contact adhesive coating 6 which, before application to the plate 1 is protected by an easily released film (not shown). The sheet 4 is adapted in size to fit snugly within the area 3 bounded by the rim 2.

The sheet 4 is secured to the plate 1 by first removing the film protecting the adhesive coating 6 and then applying the sheet to the plate whilst using sufficient pressure to provide firm adhesion. Hitherto this has been achieved by pressure rollers but in such instances the plate 1 is flat, that is there is no rim 2. The problem which this invention seeks to solve is the attainment of a firm bond between plate 1 and pre-printed sheet 4 without wrinkles forming and by an essentially manual operation.

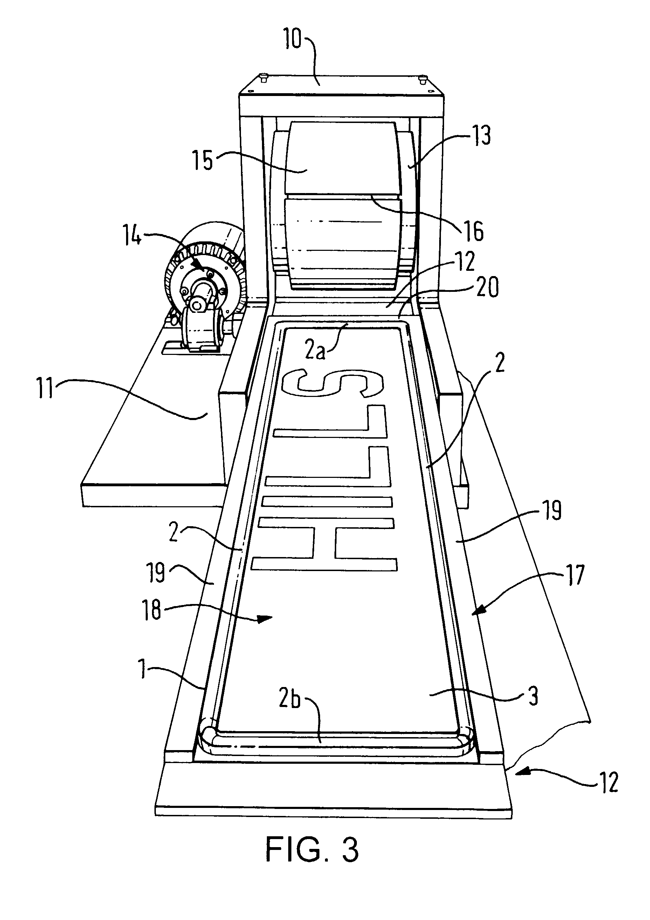

This is achieved in accordance with this invention by a method using an apparatus as shown in Fig 3.

The apparatus comprises a housing 10 mounted on a base 11 which has an elongate extension platform 12. The housing contains a roller 13 turned by means of a motor and drive unit 14. The roller has a surface formed by a layer of rubber material 15 which includes a transverse recess or slot 16. A carrier 17 has a central area 18 which is adapted to receive the plate 2 with accurate positioning defined by side pieces 19 and end stop 20. The carrier may move into the housing 10 and thus beneath the roller 13.

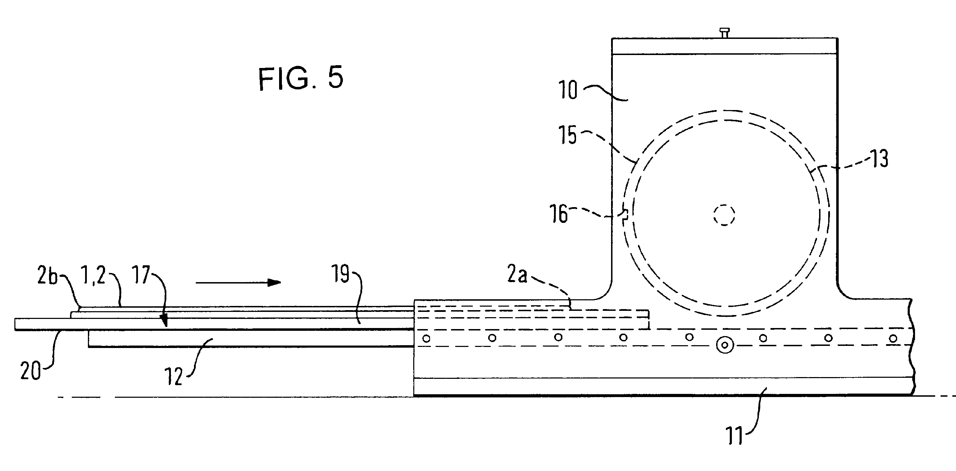

Using automatic or manual indexing means the end rim 2a of the plate 1 which is closest to the roller 13 is located so that the rim is engaged by the recess 16 in the surface 15 after which the carrier and plate move through the housing beneath the roller and in the direction shown by the arrow in Fig. 5 so that the sheet 4 is pressed firmly into contact with the plate.

In use the plate 1,2 is located in the carrier 17 and the sheet 4 has the protective film over the adhesive peeled back sufficient to allow the sheet to be tacked onto the end of the flat area 3 immediately adjacent the rim 2a facing the roller 13. The assembly is then moved by the carrier 17 such that the recess 16 in the roller 13 engages the rim 2 and the assembly moves through the housing whilst the adhesive protecting film is held and thus stripped away progressively. The roller, due to the width, exerts pressure on the sheet 4 only and not on the rim 2 and thus accommodates the rim.

The roller circumference is adapted to the length of the sheet 4 so that after one revolution of the roller the recess 16 engages the rim 2b at the other end of the plate.

This method and apparatus provide a particularly low cost method of bonding the pre-printed sheets to backing plates.

## Claims

1. A method for the production of an identification plate comprising a rigid backing plate having a peripheral upstanding rim bounding a flat area to receive a carrier sheet, one surface of which is printed with indicia and the other surface of which has a contact adhesive, the method being characterised in that:
(a) an edge of the carrier sheet is aligned in registration with the plate and the adhesive surface at said edge contacted therewith,
(b) the sheet then being progressively pressed into contact with the plate over the flat area using a pressure roller,
(c) the pressure roller having a recess, channel or depression to receive the upstanding rim.

2. A method in accordance with claim 1, characterised in that the plate has an elongate rectangular shape with a peripheral upstanding rim which has been formed by a pressing operation.

3. A method in accordance with claim 1 or 2, characterised in that the rim is in the form of a channel having a hemispherical concave cross-section as viewed from the rear of the plate.

4. A method in accordance with claim 1, 2 or 3, characterised in that the sheet comprises a flexible plastics material of which one surface, the front, has a reflective layer, with the rear surface having a contact adhesive coating protected by a releasable film.

5. A method in accordance with any preceding claim, characterised in that the sheets are pre-printed on the front surface with the required indicia using an ink medium, the printing being effected using a continuous printing machine whereby a continuous strip is printed sequentially with the required indicia, the sheet thereafter being cut into individual sheet pieces.

6. A method in accordance with any preceding claim, characterised in that the sheet is applied to the plate by first peeling away a backing at an end sufficient to enable the sheet to be "tacked" to the plate in correct registration at an end of the plate, the plate then being presented for passage beneath a firm but resilient roller which includes a transverse depression adapted to embrace the rim at one end of the plate, the plate being positioned such that the depression engages the rim whereby as the roller rotates the sheet is progressively pressed onto the plate whilst the backing is stripped away.

7. A method in accordance with any preceding claim, characterised in the use of an apparatus including a roller having a firm yet resilient surface layer including at least a transverse depression to receive the end rim of a mounting plate.

8. An apparatus for carrying out the method of any preceding claim, characterised by:
a) an elongate support platform,
b) a roller rotationally mounted in a support and located above and at an end of the platform, the roller having a surface of a firm yet resilient material and including a lateral groove or channel across the width thereof,
c) a drive means to rotate the roller,
d) a carriage mounted to slide on the platform so as to be movable beneath the roller on rotation thereof, the carriage defining an area to receive a plate, whereby an upstanding end rim of the plate engages the channel in the roller to be draw the plate and carriage beneath the roller which thereby applies pressure to the plate surface.

9. An apparatus in accordance with claim 8, wherein the circumference of the roller corresponds to the spacing between the rims at each end of the plate.

10. An apparatus in accordance with claim 8 or 9, wherein the surface of the roller has peripheral grooves spaced in parallel and in correspondence with the spacing of the rims at each side of the plate.
